# EUROPEAN PATENT SPECIFICATION

(11) **EP 4 516 748 B1**
(45) Date of publication and mention of the grant of the patent: **14.10.2026**
(21) Application number: 23937762.5
(22) Date of filing: 30.06.2023
(51) Int. Cl.: C02F 1/52, C02F 1/66, C02F 1/70, C02F 1/60, C02F 1/64, C02F 11/12, C02F 101/20, C02F 101/22, C02F 103/16

(54) **PROCESS FOR TREATING WASTEWATER IN PREPARATION PROCESS OF COBALT-NICKEL HYDROXIDE**
VERFAHREN ZUR ABWASSERBEHANDLUNG BEI DER HERSTELLUNG VON KOBALT-NICKELHYDROXID
PROCÉDÉ DE TRAITEMENT DES EAUX USÉES DANS UN PROCESSUS DE PRÉPARATION D'HYDROXYDE DE COBALT-NICKEL

(43) Date of publication of application: 05.03.2025
(73) Proprietor: PT ESG New Energy Material, Jakarta Selatan, Provinsi DKI Jakarta 12950 (ID); PT QMB New Energy Materials, Jakarta Selatan, Provinsi DKI Jakarta, 12950 (ID); Gem Co., Ltd., Shenzhen, Guangdong 518101 (CN); PT Gem Indonesia New Energy Materials, Jakarta 12950 (ID)
(72) Inventor: BRODJONEGORO, Satryo Soemantri, Provinsi DKI Jakarta 12950 (ID); XU, Kaihua, Shenzhen, Guangdong 518101 (CN); WANALDI, Rizky, Provinsi DKI Jakarta 12950 (ID); HASIBUAN, Andi Syaputra, Provinsi DKI Jakarta 12950 (ID); AJI, Tegar Mukti, Provinsi DKI Jakarta 12950 (ID); RAHMADI, Piyan, Provinsi DKI Jakarta 12950 (ID); SALIM, Emil, Provinsi DKI Jakarta 12950 (ID); YAN, Xiaodong, Provinsi DKI Jakarta 12950 (ID)
(74) Representative: Santarelli
(86) International application number: PCT/CN2023/105021
(87) International publication number: WO 2025/000490

(56) References cited:
- CA-A1- 2 534 035
- CN-A- 101 768 665
- CN-A- 101 805 828
- CN-A- 102 876 892
- CN-A- 103 194 620
- CN-A- 104 561 540
- CN-B- 102 703 696
- US-A1- 2011 110 832
- US-A1- 2022 267 877

## Description

### FIELD OF THE DISCLOSURE

The disclosure relates to the technical field of metallurgical wastewater treatment, and in particular to a wastewater treatment process in the production of nickel cobalt hydroxide.

### BACKGROUND

The laterite nickel ore wastewater mainly contains nickel, cobalt, iron, zinc, manganese, sulfate, and other pollutants. The common treatment method for laterite nickel ore wastewater is to add lime milk to precipitate and remove manganese in the laterite nickel ore tailings after neutralization. After filtration, the wastewater is discharged to the sea. In order to make the wastewater discharge meet the discharge standard and realize the resource utilization in the treatment process, the main focus is on removing nickel ions while ensuring the clarity and safety of the effluent. Therefore, it is necessary to improve the commonly used treatment methods for the laterite nickel ore wastewater.

In the related art, the patent with the publication number CN217026042U discloses a nickel-cobalt removal system for a neutralized liquid of a laterite nickel ore tailing. In this solution, the neutralized liquid of the laterite nickel ore tailing is first filtered by a filtration unit, which can effectively reduce the content of solids (such as leaching residue, neutralization residue, or sand) in the neutralized liquid. Then, the above-mentioned filtered liquid is subjected to an adsorption treatment by using an adsorption unit. Nickel and cobalt in the neutralized liquid of the laterite nickel ore tailing are removed via at least three sets of adsorption units arranged in parallel. Finally, a desorbent is introduced into the adsorption unit through a desorbent supply unit, and the adsorption unit is subjected to circulation desorption through the above circulation line.

Although nickel and cobalt are recycled in an above-mentioned manner, other pollutants such as iron, aluminum, manganese, silicon, and chromium with high concentrations are not completely treated, and the recycling of wastewater cannot be realized.

Further relevant prior art concerning the treatment of wastewater in the production of nickel cobalt hydroxide comprises US 2011/110832 A1, CN 102 703 696 B, US 2022/267877 A1 and CN 104 561 540 A.

### SUMMARY

The invention is set out in the appended set of claims and provides a wastewater treatment process in the production of nickel cobalt hydroxide, wherein the clean wastewater can reach the discharge standard and has high safety.

To achieve the above technical objectives, the invention adopts the following technical solutions:

The invention provides a wastewater treatment process in the production of nickel cobalt hydroxide, including the following steps:
S1. subjecting a laterite nickel ore acid-leaching solution successively to iron-aluminum removal and nickel-cobalt precipitation to obtain wastewater; wherein the nickel-cobalt precipitation is to obtain a residue phase as nickel cobalt hydroxide, which is used for subsequent production, and a liquid as wastewater, which enters the next stage of treatment;
S2. subjecting the wastewater successively to chromium ions, manganese ions, and silicon ion removal treatments to obtain a suspension; and
S3. reusing a portion of the suspension obtained in step S2 by returning it to the iron-aluminum removal step S1; the subjecting a remaining portion of the suspension obtained in step S2 successively to homogenizing, alkali adjusting, standing still, CCD counter-current washing, and solid-liquid separation to obtain a supernatant and a residue phase, collecting the residue phase, and discharging the supernatant after neutralization.

Preferably, the number of CCD washing stages is 9, and the washing ratio is 2.0-2.5.

Preferably, the steps of chromium ion removal are as follows: adding a reducing agent to the wastewater to perform a reduction reaction, followed by precipitation and separation to obtain a primary liquid; the reducing agent is a biomass straw hydrolysate; the preparation method of the biomass straw hydrolysate is as follows: grinding biomass straw into powder, and then adding concentrated sulfuric acid for hydrolysis.

Preferably, the steps of manganese ion removal are as follows: introducing a mixed gas of SO₂ and air into the primary liquid, adjusting the pH of the primary liquid to 3-4 and the temperature to 30-80°C, precipitating, and separating to obtain a secondary liquid.

Preferably, the steps of silicon ion removal are as follows: adjusting the pH of the secondary liquid to 1-2 at a pressure of 4.5-5.5 MPa and controlling the temperature to 150-200°C, precipitating, and separating to obtain a suspension.

Preferably, in step S3, the reused suspension accounts for 20-30% of the total suspension by mass.

Preferably, the iron-aluminum removal step includes one-stage iron-aluminum removal and two-stage iron-aluminum removal.

Preferably, the process conditions for one stage of iron-aluminum removal include: controlling the temperature to 80-85°C and the pH to 3.6-4.0.

Preferably, the process conditions for the two-stage iron-aluminum removal include: controlling the temperature to 75-80°C, and controlling the pH to 4.6-5.0 by using NaOH.

Preferably, the process conditions for nickel-cobalt precipitation include: adjusting the pH to 7.8-8.3 by using NaOH, adjusting the reaction temperature to 70°C, and the reaction time to 3-4 min.

### Advantageous Effect of the Application:

The wastewater treatment process of the invention can realize the resource utilization of the laterite nickel ore wastewater, and the liquid obtained after purification has a high degree of clarity and high safety, reaching the emission standard;

The wastewater treatment process of the invention recycles sodium salts and sulfates via a recycling process, reduces the amount of sodium sulfate, and has a good liquidresidue separation effect;

The process sequence of iron-aluminum removal, nickel-cobalt precipitation, chromium ion removal, manganese ion removal, and silicon ion removal in the invention is beneficial to raw material saving. The pH value in the liquid firstly increases and then decreases, with less mutual interference, and the treatment of each impurity ion is more thorough.

The invention introduces a multi-stage CCD counter-current washing in the wastewater treatment process, which overcomes the disadvantage that the suspension cannot be directly subjected to pressure filtration for solid-liquid separation.

### BRIEF DESCRIPTION OF THE DRAWINGS

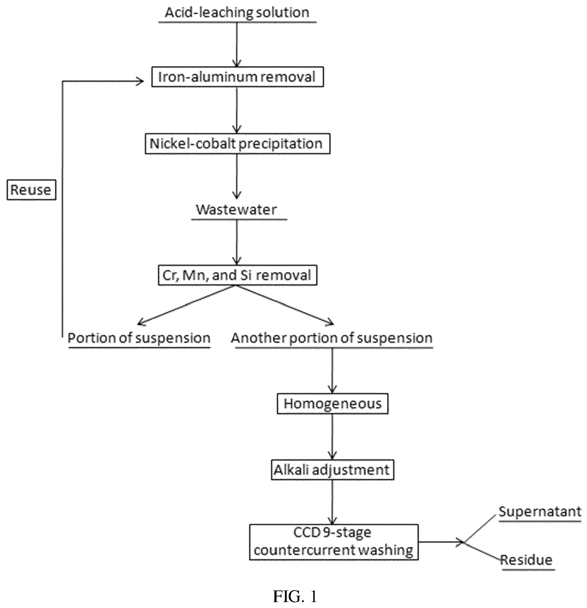

FIG. 1 is a process flow diagram of this scheme.

### DETAILED DESCRIPTION OF PREFERRED EMBODIMENTS

In order that the objects, aspects, and advantages of the invention will become more apparent, a more particular description of the disclosure will be rendered by reference to the embodiments. It should be understood that the particular embodiments described herein are illustrative only and are not restrictive.

As shown in FIG. 1, a wastewater treatment process in the production of nickel cobalt hydroxide includes the following steps:
S1. subjecting a laterite nickel ore acid-leaching solution successively to iron-aluminum removal and nickel-cobalt precipitation to obtain wastewater;
S2. subjecting the wastewater successively to chromium ions, manganese ions, and silicon ion removal treatments to obtain a suspension; and
S3. reusing portion of the suspension and continuing iron-aluminum removal; subjecting the remaining suspension successively to homogenizing, alkali adjusting, standing still, CCD counter-current washing, and solid-liquid separation to obtain a supernatant and a residue phase, collecting the residue phase, and discharging the supernatant after neutralization.

The invention relates to the reuse of the suspension. It is known to a person skilled in the art that there are a large number of sodium ions and sulfate ions after the laterite nickel ore is subjected to acid leaching--iron-aluminum removal--nickel-cobalt precipitation, and therefore there will be a large number of sodium salts and sulfate salts in both the wastewater and the subsequent suspension. The reuse of portion of the suspension to the iron-aluminum removal step in this scheme can reduce the use of auxiliary materials and further remove the residual iron ions in the wastewater. The sodium sulfate reacts with the iron ions in the wastewater to form NaFe₃(SO₄)₂(OH)₆ precipitate as follows:

3Fe³⁺+2SO₄²⁻+Na⁺+6H₂O→NaFe₃(SO₄)₂(OH)₆+6H⁺.

In this scheme, the number of stages of CCD counter-current washing is 9 and the washing ratio is 2.0-2.5. Since the suspension contains a large amount of solid particles and is in a flocculent state, it is not easy to directly perform solid-liquid separation by a filter and a filter press, a multi-stage CCD counter-current washing process is designed in the disclosure. In the CCD counter-current washing of the disclosure, 9 thickeners are used to perform a solid-liquid separation on the treated suspension, then the residues obtained from the 8 thickeners are fed to thickener No. 9. The thickener No. 9 further performs a filtration, precipitation, and washing on the residues obtained from the precipitation Nos. 1-8, and the residue from the thickener No. 9 enters a filter press for filter pressing, finally achieving the solid-liquid separation.

The steps for chromium ion removal are as follows: adding a reducing agent to the wastewater to perform a reduction reaction, followed by precipitation and separation to obtain a primary liquid; the reducing agent is a biomass straw hydrolysate. The preparation method of the biomass straw hydrolysate is as follows: grinding biomass straw into powder, and then adding concentrated sulfuric acid for hydrolysis; the hydrolysis temperature is 30-80°C; the solid-liquid ratio of the hydrolysis is 10-100 g/L; and the hydrolysis time is 1-20 h. The original biomass straw does not have reducibility, but the biomass straw is subjected to acid hydrolysis to obtain an aldehyde substance, which can be used as a reducing agent. After adding the reducing agent, hexavalent chromium ions in the wastewater are converted into trivalent chromium and precipitated in the form of Cr(OH)₃, thereby removing chromium from the wastewater, and obtaining a primary liquid by precipitation and separation.

The steps for manganese ion removal are as follows: introducing a mixed gas of SO₂ and air into the primary liquid, adjusting the pH of the primary liquid to 3-4 and the temperature to 30-80°C, precipitating, and separating to obtain a secondary liquid, wherein the precipitate is MnO₂ or Mn₃O₄. The reaction formulas for manganese ion removal are as follows:

MnSO₄+SO₂+O₂+2H₂O=MnO₂+2H₂SO₄

2MnSO₄+SO₂+O₂+3H₂O=Mn₃O₄+3H₂SO₄

The steps for silicon ion removal are as follows: adjusting the pH of the secondary liquid to 1-2 under a pressure of 4.5-5.5 MPa, controlling the temperature to 150-200°C, precipitating, and separating to obtain a suspension. In this process, the silicate combines with hydrogen ions and is converted into a water-insoluble silicic acid precipitate. Under the conditions of high temperature and high pressure, the silicic acid is removed as silica, and a suspension is obtained after precipitation and separation. A benefit of converting silicic acid to silica is that the problem of extreme difficulty in the filtration of silicic acid due to its presence in solution, mostly in the form of hydrogels, is overcome.

In the treatment processes for chromium ions, manganese ions, and silicon ion removal, due to the presence of a large number of flocculent substances in the precipitated liquid, precipitate separation is carried out by using pipelines to extract the liquid from above the reaction tank, and the obtained liquid enters the next treatment step.

In step S3, the reused suspension accounts for 20-30% of the whole suspension by mass, and the reused suspension carries a large amount of sodium ions and sulfate ions, which can reduce the use of sodium salts and sulfate salts. However, it would increase the difficulty of removing iron and aluminum and precipitating nickel and chromium due to the hindrance of particles in the liquid to recycle the excessive suspension.

The iron-aluminum removal step includes one-stage iron-aluminum removal and two-stage iron-aluminum removal.

The process conditions for the one-stage iron-aluminum removal include: controlling the temperature to 80-85°C, and the pH to 3.6-4.0; precipitating to obtain a residue phase to remove iron and aluminum; in the one-stage iron-aluminum removal, copper, zinc, scandium, and other impurity metals can be also removed simultaneously.

The process conditions for the two-stage iron-aluminum removal include: controlling the temperature to 75-80°C, and adjusting the pH to 4.6-5.0 using NaOH; after precipitation, obtaining a residue phase to further remove iron and aluminum.

The process conditions for nickel-cobalt precipitation include: adjusting the pH to 7.8-8.3 by using NaOH, adjusting the reaction temperature to 70°C, and the reaction time to 3-4 min; precipitating to obtain a residue phase as nickel cobalt hydroxide, which is used for subsequent production, and a liquid as wastewater, which enters the next stage of treatment.

The CCD 9-stage counter-current washing is achieved by the following devices: the CCD thickening device is provided with 9 thickeners arranged in sequence and a filter press connected to the last thickener. Specifically, the CCD thickening device is provided with 8 thickening ponds, wherein the first eight thickeners are arranged in sequence to perform solid-liquid separation on the wastewater, the residue of the first eight thickeners is fed to the ninth thickener, the residues obtained from the precipitations of No. 1-No. 8 are further filtered and precipitated and washed by the thickener No. 9, and the residue from No. 9 is subjected to pressure filtration by a pressure filter.

The following provides further explanation of this scheme through specific examples.

### Example 1

A wastewater treatment process in the production of nickel cobalt hydroxide included the following steps:
S1. The acid-leaching solution of the laterite nickel ore was successively subjected to iron-aluminum removal and nickel-cobalt precipitation to obtain wastewater. The steps of iron-aluminum removal included a one-stage iron-aluminum removal and a two-stage iron-aluminum removal. The process conditions for the one-stage iron-aluminum removal included: controlling the temperature to 80°C and the pH to 3.6. The process conditions for the two-stage iron-aluminum removal included: controlling the temperature to 75°C and adjusting the pH to 4.6 using NaOH. The process conditions for nickel-cobalt precipitation included: adjusting the pH value to 7.8 by using NaOH, the reaction temperature to 70°C, and the reaction time to 3 min.
S2. The wastewater was subjected successively to chromium ions, manganese ions, and silicon ion removal treatments to obtain a suspension. The steps of chromium ion removal included: adding a reducing agent to the wastewater to perform a reduction reaction, followed by precipitation and separation to obtain a primary liquid. The reducing agent was a biomass straw hydrolysate. The preparation method of the biomass straw hydrolysate included: grinding the biomass straw into a powder and then adding concentrated sulfuric acid for hydrolysis. The hydrolysis temperature was 80°C; the solid-liquid ratio of the hydrolysis was 10 g/L; and the hydrolysis time was 20 h. The steps for manganese ion removal included: introducing a mixed gas of SO₂ and air into the primary liquid, adjusting the pH of the primary liquid to 3 and the temperature to 30°C, precipitating, and separating to obtain a secondary liquid. The steps for silicon ion removal included: adjusting the pH of the secondary liquid to 1 under a pressure of 4.5 MPa, controlling the temperature to 150°C, precipitating, and separating to obtain a suspension.
S3. The 30% suspension was reused and continued to iron-aluminum removal. The remaining suspension was subjected successively to homogenizing, alkali adjusting, standing still, CCD counter-current washing, and solid-liquid separation to obtain a supernatant and a residue phase. The residue phase was collected, and the supernatant after neutralization was discharged. The number of CCD counter-current washing stages was 9 and the wash ratio was 2.0.

### Example 2

A wastewater treatment process in the production of nickel cobalt hydroxide included the following steps:
S1. The acid-leaching solution of the laterite nickel ore was successively subjected to iron-aluminum removal and nickel-cobalt precipitation to obtain wastewater. The steps of iron-aluminum removal included a one-stage iron-aluminum removal and a two-stage iron-aluminum removal. The process conditions for the one-stage iron-aluminum removal included: controlling the temperature to 85°C and the pH to 4.0. The process conditions for the two-stage iron-aluminum removal included: controlling the temperature to 80°C and adjusting the pH to 5.0 using NaOH. The process conditions for nickel-cobalt precipitation included: adjusting the pH value to 8.3 by using NaOH, the reaction temperature to 70°C, and the reaction time to 4 min.
S2. The wastewater was subjected successively to chromium ions, manganese ions, and silicon ion removal treatments to obtain a suspension. The steps of chromium ion removal included: adding a reducing agent to the wastewater to perform a reduction reaction, followed by precipitation and separation to obtain a primary liquid. The reducing agent was a biomass straw hydrolysate. The preparation method of the biomass straw hydrolysate included: grinding the biomass straw into a powder and then adding concentrated sulfuric acid for hydrolysis. The hydrolysis temperature was 30°C; the solid-liquid ratio of the hydrolysis was 100 g/L; and the hydrolysis time was 1 h. The steps for manganese ion removal included: introducing a mixed gas of SO₂ and air into the primary liquid, adjusting the pH of the primary liquid to 4 and the temperature to 80°C, precipitating, and separating to obtain a secondary liquid. The steps for silicon ion removal included: adjusting the pH of the secondary liquid to 2 under a pressure of 5.5 MPa, controlling the temperature to 200°C, precipitating, and separating to obtain a suspension.
S3. The 20% suspension was reused and continued to iron-aluminum removal. The remaining suspension was subjected successively to homogenizing, alkali adjusting, standing still, CCD counter-current washing, and solid-liquid separation to obtain a supernatant and a residue phase. The residue phase was collected, and the supernatant after neutralization was discharged. The number of CCD counter-current washing stages was 9 and the wash ratio was 2.5.

### Test and evaluation

The concentrations of pollutants in the laterite nickel ore wastewater and the test results of the concentrations of each pollutant after the treatment of Example 1 are shown in Table 1.

**Table 1 Comparison of pollutant concentration before and after treatment**

| Pollutant substance | Original wastewater ion concentration (mg/L) | Supernatant ion concentration after treatment (mg/L) |
|---|---|---|
| Cu | 0.51 | 0.008 |
| Zn | 0.24 | 0.007 |
| Cr | 0.42 | 0.039 |
| Pb | 0.32 | 0.015 |
| Si | 0.42 | 0.017 |
| Ni | 5.2 | 0.005 |
| Fe | 6.1 | 0.014 |
| Co | 3.7 | 0.2 |
| Mn | 270 | 15 |
| A1 | 5.6 | 0.04 |

It can be seen from the above-mentioned results that the resource utilization of the laterite nickel ore wastewater can be realized, and the liquid obtained after purification has a high degree of clarity and high safety, reaching the discharge standard.

## Claims

1. A wastewater treatment process in the production of nickel cobalt hydroxide, **characterized by** comprising the following steps:
S1. subjecting a laterite nickel ore acid-leaching solution successively to iron-aluminum removal and nickel-cobalt precipitation to obtain wastewater, wherein the nickel-cobalt precipitation is to obtain a residue phase as nickel cobalt hydroxide, which is used for subsequent production, and a liquid as wastewater, which enters the next stage of treatment;
S2. subjecting the wastewater successively to chromium ions, manganese ions, and silicon ion removal treatments to obtain a suspension; and
S3. reusing a portion of the suspension obtained in step S2 by returning it to the iron-aluminum removal step S1; subjecting the remaining portion of the suspension obtained in step S2 successively to homogenizing, alkali adjusting, standing still, CCD counter-current washing, and solid-liquid separation to obtain a supernatant and a residue phase, collecting the residue phase, and discharging the supernatant after neutralization.

2. The wastewater treatment process in the production of nickel cobalt hydroxide according to claim 1, **characterized in that** the number of CCD counter-current washing stages is 9 and the washing ratio is 2.0-2.5.

3. The wastewater treatment process in the production of nickel cobalt hydroxide according to claim 1, **characterized in that** the steps of chromium ion removal are as follows: adding a reducing agent to the wastewater to perform a reduction reaction, followed by precipitation and separation to obtain a primary liquid; the reducing agent is a biomass straw hydrolysate; the preparation method of the biomass straw hydrolysate is as follows: grinding biomass straw into powder, and then adding concentrated sulfuric acid for hydrolysis.

4. The wastewater treatment process in the production of nickel cobalt hydroxide according to claim 3, **characterized in that** the steps of manganese ion removal are as follows: introducing a mixed gas of SO₂ and air into the primary liquid, adjusting the pH of the primary liquid to 3-4 and the temperature to 30-80°C, precipitating, and separating to obtain a secondary liquid.

5. The wastewater treatment process in the production of nickel cobalt hydroxide according to claim 4, **characterized in that** the steps of silicon ion removal are as follows: adjusting the pH of the secondary liquid to 1-2 at a pressure of 4.5-5.5 MPa and controlling the temperature to 150-200°C, precipitating, and separating to obtain the suspension.

6. The wastewater treatment process in the production of nickel cobalt hydroxide according to claim 1, **characterized in that** in step S3, the reused portion of the suspension accounts for 20-30% of the total suspension by mass.

7. The wastewater treatment process in the production of nickel cobalt hydroxide according to claim 1, **characterized in that** the step of iron-aluminum removal comprises a one-stage iron-aluminum removal and a two-stage iron-aluminum removal.

8. The wastewater treatment process in the production of nickel cobalt hydroxide according to claim 7, **characterized in that** the process conditions for the one-stage iron-aluminum removal comprise: controlling the temperature to 80-85°C and the pH to 3.6-4.0.

9. The wastewater treatment process in the production of nickel cobalt hydroxide according to claim 7, **characterized in that** the process conditions for the two-stage iron-aluminum removal comprise: controlling the temperature to 75-80°C and the pH to 4.6-5.0 by using NaOH.

10. The wastewater treatment process in the production of nickel cobalt hydroxide according to claim 1, **characterized in that** the process conditions for nickel-cobalt precipitation comprise: adjusting the pH to 7.8-8.3 by using NaOH, adjusting the reaction temperature to 70°C, and the reaction time to 3-4 min.

## Patentansprüche

1. . Verfahren zur Abwasserbehandlung bei der Herstellung von Nickelkobalthydroxid, **dadurch gekennzeichnet, dass** es die folgenden Schritten umfasst:
S1. Unterziehen einer Laterit-Nickelerzsäure-Laugungslösung nacheinander einer Eisen-Aluminium-Entfernung und Nickel-Kobalt-Ausfällung, um Abwasser zu erhalten, wobei die Nickel-Kobalt-Ausfällung eine Restphase als Nickelkobalthydroxid, welche für die nachfolgende Produktion verwendet wird, und eine Flüssigkeit als Abwasser erhalten soll, welche in die nächste Stufe der Behandlung eintritt;
S2. Unterziehen des Abwassers nacheinander einer Chromionen-, Manganionen- und Siliziumionenentfernungsbehandlung, um eine Suspension zu erhalten; und
S3. Wiederverwenden eines Teils der in Schritt S2 erhaltenen Suspension, indem sie in den Eisen-Aluminium-Entfernungsschritt S1 zurückgeführt wird; Unterziehen des verbleibenden Teils der in Schritt S2 erhaltenen Suspension nacheinander einer Homogenisierung, Alkalianpassung, einem Stillstand, einer CCD-Gegenstromwäsche und Fest-Flüssig-Trennung, um einen Überstand und eine Restphase zu erhalten, Auffangen der Restphase und Austragen des Überstands nach Neutralisierung.

2. . Verfahren zur Abwasserbehandlung bei der Herstellung von Nickelkobalthydroxid nach Anspruch 1, **dadurch gekennzeichnet, dass** die Anzahl der CCD-Gegenstromwaschphasen 9 beträgt und das Waschverhältnis 2,0-2,5 beträgt.

3. . Verfahren zur Abwasserbehandlung bei der Herstellung von Nickelkobalthydroxid nach Anspruch 1, **dadurch gekennzeichnet, dass** die Schritte der Chromionenentfernung wie folgt sind: Hinzufügen eines Reduktionsmittels zu dem Abwasser, um eine Reduktionsreaktion durchzuführen, gefolgt von Ausfällung und Abscheidung, um eine Primärflüssigkeit zu erhalten; das Reduktionsmittel ist ein Biomasse-Strohhydrolysat; das Herstellungsverfahren des Biomasse-Strohhydrolysats ist wie folgt: Mahlen von Biomassestroh zu Pulver und anschließend Hinzufügen von konzentrierter Schwefelsäure zur Hydrolyse.

4. . Verfahren zur Abwasserbehandlung bei der Herstellung von Nickelkobalthydroxid nach Anspruch 3, **dadurch gekennzeichnet, dass** die Schritte der Manganionenentfernung wie folgt sind: Einbringen eines gemischten Gases aus SO₂ und Luft in die Primärflüssigkeit, Einstellen des pH-Werts der Primärflüssigkeit auf 3-4 und der Temperatur auf 30-80 °C, Ausfällen und Trennen, um eine Sekundärflüssigkeit zu erhalten.

5. . Verfahren zur Abwasserbehandlung bei der Herstellung von Nickelkobalthydroxid nach Anspruch 4, **dadurch gekennzeichnet, dass** die Schritte der Siliziumionenentfernung wie folgt sind: Einstellen des pH-Werts der Sekundärflüssigkeit auf 1-2 bei einem Druck von 4,5-5,5 MPa und Regeln der Temperatur auf 150-200 °C, Ausfällen und Trennen, um die Suspension zu erhalten.

6. . Verfahren zur Abwasserbehandlung bei der Herstellung von Nickelkobalthydroxid nach Anspruch 1, **dadurch gekennzeichnet, dass** in Schritt S3 der wiederverwendete Anteil der Suspension 20-30 Massenprozent der Gesamtsuspension ausmacht.

7. . Verfahren zur Abwasserbehandlung bei der Herstellung von Nickelkobalthydroxid nach Anspruch 1, **dadurch gekennzeichnet, dass** der Schritt der Eisen-Aluminium-Entfernung eine einstufige Eisen-Aluminium-Entfernung und eine zweistufige Eisen-Aluminium-Entfernung umfasst.

8. . Verfahren zur Abwasserbehandlung bei der Herstellung von Nickelkobalthydroxid nach Anspruch 7, **dadurch gekennzeichnet, dass** die Prozessbedingungen für die einstufige Eisen-Aluminium-Entfernung umfassen: Regeln der Temperatur auf 80-85 °C und des pH-Werts auf 3,6-4,0.

9. . Verfahren zur Abwasserbehandlung bei der Herstellung von Nickelkobalthydroxid nach Anspruch 7, **dadurch gekennzeichnet, dass** die Prozessbedingungen für die zweistufige Eisen-Aluminium-Entfernung umfassen: Regeln der Temperatur auf 75-80 °C und des pH-Werts auf 4,6-5,0 durch Verwendung von NaOH.

10. . Verfahren zur Abwasserbehandlung bei der Herstellung von Nickelkobalthydroxid nach Anspruch 1, **dadurch gekennzeichnet, dass** die Prozessbedingungen für die Nickelkobaltausfällung umfassen: Einstellen des pH-Werts auf 7,8-8,3 durch Verwendung von NaOH, Einstellen der Reaktionstemperatur auf 70 °C und der Reaktionszeit auf 3-4 min.

## Revendications

1. Procédé de traitement des eaux usées dans la production d'hydroxyde de nickel-cobalt, **caractérisé en ce qu'**il comporte les étapes suivantes :
S1. la soumission d'une solution de lixiviation par acide de minerai de nickel latéritique successivement à l'élimination du fer-aluminium et à la précipitation du nickel-cobalt pour obtenir des eaux usées, dans lequel la précipitation du nickel-cobalt est destinée à obtenir une phase résiduelle sous forme d'hydroxyde de nickel-cobalt, qui est utilisée pour une production ultérieure, et un liquide sous forme d'eaux usées, qui entre dans l'étape suivante de traitement ;
S2. la soumission successive des eaux usées à des traitements d'élimination des ions chrome, des ions manganèse et des ions silicium pour obtenir une suspension ; et
S3. la réutilisation d'une partie de la suspension obtenue à l'étape S2 en la renvoyant à l'étape d'élimination du fer-aluminium S1 ; la soumission de la partie restante de la suspension obtenue à l'étape S2 successivement à l'homogénéisation, à l'ajustement alcalin, à l'arrêt, au lavage par décantation à contre-courant et à la séparation solide-liquide pour obtenir un surnageant et une phase résiduelle, la collecte de la phase résiduelle, et la décharge du surnageant après neutralisation.

2. Procédé de traitement des eaux usées dans la production d'hydroxyde de nickel-cobalt selon la revendication 1, **caractérisé en ce que** le nombre d'étapes de lavage par décantation à contre-courant est de 9 et le rapport de lavage est de 2,0-2,5.

3. Procédé de traitement des eaux usées dans la production d'hydroxyde de nickel-cobalt selon la revendication 1, **caractérisé en ce que** les étapes d'élimination des ions chrome sont les suivantes : l'ajout d'un agent réducteur aux eaux usées pour réaliser une réaction de réduction, suivi d'une précipitation et d'une séparation pour obtenir un liquide primaire ; l'agent réducteur est un hydrolysat de paille de biomasse ; le procédé de préparation de l'hydrolysat de paille de biomasse est le suivant : le broyage de paille de biomasse en poudre, puis l'ajout d'acide sulfurique concentré pour hydrolyse.

4. Procédé de traitement des eaux usées dans la production d'hydroxyde de nickel-cobalt selon la revendication 3, **caractérisé en ce que** les étapes d'élimination des ions manganèse sont les suivantes : l'introduction d'un gaz mélangé de SO₂ et d'air dans le liquide primaire, l'ajustement du pH du liquide primaire à 3-4 et de la température à 30-80 °C, la précipitation et la séparation pour obtenir un liquide secondaire.

5. Procédé de traitement des eaux usées dans la production d'hydroxyde de nickel-cobalt selon la revendication 4, **caractérisé en ce que** les étapes d'élimination des ions silicium sont les suivantes : l'ajustement du pH du liquide secondaire à 1-2 à une pression de 4,5-5,5 MPa et la régulation de la température à 150-200 °C, la précipitation et la séparation pour obtenir la suspension.

6. Procédé de traitement des eaux usées dans la production d'hydroxyde de nickel-cobalt selon la revendication 1, **caractérisé en ce qu'**à l'étape S3, la partie réutilisée de la suspension représente 20 à 30 % de la suspension totale en masse.

7. Procédé de traitement des eaux usées dans la production d'hydroxyde de nickel-cobalt selon la revendication 1, **caractérisé en ce que** l'étape d'élimination du fer-aluminium comporte une élimination du fer-aluminium en une étape et une élimination du fer-aluminium en deux étapes.

8. Procédé de traitement des eaux usées dans la production d'hydroxyde de nickel-cobalt selon la revendication 7, **caractérisé en ce que** les conditions de procédé pour l'élimination du fer-aluminium en une étape comportent : la régulation de la température à 80-85 °C et du pH à 3,6-4,0.

9. Procédé de traitement des eaux usées dans la production d'hydroxyde de nickel-cobalt selon la revendication 7, **caractérisé en ce que** les conditions de procédé pour l'élimination du fer-aluminium en deux étapes comportent : la régulation de la température à 75-80 °C et du pH à 4,6-5,0 en utilisant du NaOH.

10. Procédé de traitement des eaux usées dans la production d'hydroxyde de nickel-cobalt selon la revendication 1, **caractérisé en ce que** les conditions de procédé pour la précipitation de nickel-cobalt comportent : l'ajustement du pH à 7,8-8,3 en utilisant du NaOH, l'ajustement de la température de réaction à 70 °C et du temps de réaction à 3-4 min.
